# EUROPÄISCHE PATENTSCHRIFT

(11) **EP 2 947 339 B1**
(45) Veröffentlichungstag und Bekanntmachung des Hinweises auf die Patenterteilung: **28.03.2018**
(21) Anmeldenummer: 15168489.1
(22) Anmeldetag: 20.05.2015
(51) Int. Cl.: F16C 33/58, F16C 33/62

(54) **GROSSLAGER, INSBESONDERE HAUPTLAGER FÜR EINE WINDKRAFTANLAGE, SOWIE WINDKRAFTANLAGE MIT EINEM SOLCHEN GROSSLAGER**
LARGE BEARING, IN PARTICULAR MAIN BEARING FOR A WIND TURBINE, AND WIND TURBINE WITH SUCH A LARGE BEARING
GRAND PALIER, EN PARTICULIER PALIER PRINCIPAL POUR UNE ÉOLIENNE, ET ÉOLIENNE DOTÉE D'UN TEL GRAND PALIER

(30) Priorität: 20.05.2014 DE 202014102358 U
(43) Veröffentlichungstag der Anmeldung: 25.11.2015
(73) Patentinhaber: Eolotec GmbH, 90429 Nürnberg (DE)
(72) Erfinder: Pick, Mathias, DE - 90459 Nürnberg (DE); Losert, Wolfgang, DE - 90408 Nürnberg (DE)
(74) Vertreter: FDST Patentanwälte

(56) Entgegenhaltungen:
- EP-A1- 2 562 081
- WO-A1-2013/113487
- US-A1- 2009 046 972

## Beschreibung

Die Erfindung betrifft ein Hauptlager für eine Windkraftanlage mit zwei über zumindest ein Wälzlager aneinander gelagerten Bauteilen, nämlich ein Rotor und ein Stator, wobei das Wälzlager eine Mehrzahl an Wälzkörpern aufweist. Die Erfindung betrifft weiterhin eine Windkraftanlage mit einem solchen Hauptlager.

Ein derartiges als Hauptlagereinheit für eine Windkraftanlage ausgebildetes Großlager ist beispielsweise aus der WO 2013/113487 A1 oder der WO 2013/152850 A1 zu entnehmen.

Horizontale Windkraftanlagen weisen allgemein einen Turm auf, an dessen Kopfende eine drehbare Gondel angeordnet ist, die einen Maschinenträger bildet. An der Gondel ist eine Rotornabe um eine horizontal verlaufende Rotationsachse drehbar gelagert, an der Rotorblätter befestigt sind. Aus der EP 2 562 081 A ist beispielsweise eine spezielle Lageranordnung für eine Lagerung der Rotorblätter an der Rotornabe zu entnehmen.

Für die Lagerung der Rotornabe am Maschinenträger ist die Hauptlagereinheit vorgesehen. Die Hauptlagereinheit weist dabei üblicherweise einen Rotor sowie einen Stator auf. Häufig wird der Rotor auch als Welle und der Stator auch als Gehäuse bezeichnet. Die in den genannten Dokumenten zum Stand der Technik beschriebenen Hauptlagereinheiten weisen jeweils zwei in Richtung der Rotationsachse zueinander beabstandete Wälzlager auf, über die der Rotor am Stator gelagert ist. Über die beiden Wälzlager, den Rotor sowie den Stator ist hierbei ein Vorspannkreis ausgebildet. Einer der Lagerringe der Wälzlager ist hierbei mit Hilfe eines Vorspannrings zur Erzeugung der Vorspannung und zur Ausbildung des Vorspannkreises gegen die weiteren Bauteile verspannbar.

Neben horizontalen Windkraftanlagen sind auch so genannte vertikale Windkraftanlagen bekannt, bei denen die Rotationsachse in vertikaler Richtung verläuft. Für derartige vertikale Windkraftanlagen lassen sich ebenfalls Hauptlagereinheiten verwenden, die nach dem gleichen Prinzip wie die aus der WO 2013/113487 A1 oder der WO 2013/152850 A1 Bekannten ausgebildet sind, lediglich mit einer vertikalen Ausrichtung.

Derartige Hauptlagereinheiten weisen typischerweise einen Durchmesser von mehreren Metern, beispielsweise im Bereich von 1 bis zu 3,5m bei Leistungsklassen zwischen 1 bis 5MW bei einer Länge von ebenfalls mehreren Metern auf. Je nach Ausgestaltung kann dabei der Stator oder der Rotor das zur Rotationsachse orientierte innen liegende Bauteil bilden. Dieses ist typischerweise als Hohlbauteil ausgebildet und begehbar.

Unter Großlager werden vorliegend allgemein Lager verstanden, die für hohe Traglasten beispielsweise von mehreren Tonnen ausgebildet sind und typischerweise einen Durchmesser >1m und insbesondere >2 m aufweisen.

Die in dem genannten Stand der Technik beschriebene Hauptlagereinheit ist als vorgefertigte Baueinheit ausgeführt, welche als solche vor Ort an die Baustelle als vorgespanntes Hauptlager geliefert werden kann und dann nur noch mit der Rotornabe bzw. dem Maschinenträger verbunden werden muss.

Die rasante Entwicklung der Anlagenleistung moderner Windkraftanlagen hat in den letzten Jahren zu zahlreichen Technologiesprüngen geführt. Hiervon ist insbesondere die Hauptlagerung der Windkraftanlagen betroffen. Herkömmliche Lagerungen der 1,5MW-Leistungsklasse hatten noch ein Gewicht von 0,5t und einen Außendurchmesser von <1m. Im Leistungsbereich von 5MW sind Lagerungskonzepte mit 7 bis 13t und einem Außendurchmesser bis zu 3,2m bereits üblich. Dieser extreme Technologiesprung führt zu zahlreichen technologischen und wirtschaftlichen Herausforderungen.

Mit immer größeren Wälzlagern hat sich insbesondere ein sicherer Lagersitz als problematisch herausgestellt. Wälzlager werden üblicherweise mittels so genannter Presssitze positioniert bzw. befestigt, d.h. ein jeweiliger Lagerring des Wälzlagers, also ein Innenring sowie ein Außenring, werden in eine entsprechende ringförmige Aufnahme am Rotor bzw. an dem Stator eingepresst.

Dabei handelt es sich um eine Passungspaarung mit Übermaß womit ein form- und kraftschlüssiger Verband entsteht. Da bei großen Lagerdurchmessern der Lagerringquerschnitt zunehmend abnimmt, ergibt sich ein sehr ungünstiges Verhältnis von Durchmesser/Ringquerschnitt, womit eine ausreichende Kraft (Fugenpressung) für einen festen Lagersitz nicht mehr sichergestellt werden kann. Eine weitere Erhöhung des Passungsübermaßes führt nur zu geringfügiger Erhöhung der Fugenpressung, da der dünnwandige Lagerring sich leichter aufweitet, wohingegen der massivere Rotor bzw. Stator sich nur geringfügig einschnürt. Eine zu starke Aufweitung des Lagerrings wiederum führt zu hohen Zugspannungen bzw. Druckspannungen im Lagerring, was zu einer negativen Beeinflussung der Laufbahngeometrie durch eine Formabweichung des Lagerrings führen kann. Weiterhin wird dadurch auch bei vielen Lagerbauformen die Lagerluft, also ein positives Lagerspiel verändert, was sich direkt auf die Lebensdauer und Laufruhe des Lagers negativ auswirken kann.

Der somit nicht ausreichende Presssitz zwischen Lagerring und Rotor/ Stator birgt daher das Risiko von Passungsrost und Ringwandern, was zum Versagen der Wälzlagerung und/oder des Rotors (Welle) bzw. des Stators (Gehäuse) führt. Der Schadensmechanismus beginnt in der Regel mit kleinen Relativbewegungen im Lagersitz zwischen diesem und dem Lagerring aufgrund zu geringer Kräfte (Fugenpressung), wodurch es zum gleitenden Verdrehen und Verschieben der Passungsflächen zueinander kommt. Hierdurch werden Randschichtteilchen meist vom weicheren Bauteil abgeschert, wodurch Löcher und schuppenartige Materialteilchen entstehen. Man spricht bei diesem Verschleißmechanismus von adhäsivem Verschleiß. Überlagert und beschleunigt wird dieser Prozess durch eine Oxidation in der Passungsfuge. Aufgrund der Relativbewegungen können Wasser, Sauerstoff und andere Medien in den Kontaktbereich gelangen, was wiederum zu einer chemischen Reaktion führt, die in Kombination mit der Bauteilbewegung als Tribooxidation bezeichnet wird.

In der Regel ermüdet bei diesem Schadensverlauf der weichere Teil in der Verschleißkette, was in der Regel die Welle bzw. das Gehäuse ist. Oftmals kommt es erst zum großflächigen Materialabtrag unter dem Lager und letztendlich zum Bruch der Welle direkt am Lagersitz aufgrund der Kerbwirkung und hohen Kräfte. Verstärkt wird diese Problematik durch den erforderlichen Leichtbau in der Windkraft. Aufgrund der limitierten Turmkopfmassen, des anspruchsvollen Transportes und der teuren Krankapazitäten wird versucht, die mechanischen Strukturen leichter zu gestalten. Maschinenträger, Welle und Gehäuse sind daher nicht (mehr) als hochsteife Strukturbauteile anzusehen. Doch genau eine sehr steife Umgebung wird bei der Basisauslegung von den Wälzlagerherstellern für jedes Wälzlager gefordert. Die Strukturbauteile moderner Windkraftanlagen verformen sich unter den hohen Windlasten so massiv, dass auch der Wälzlagersitz großflächigen Verformungen unterworfen ist. Diese globalen Verformungen tragen zusätzlich zur Verschärfung der Problematik hinsichtlich Passungsrost und adhäsivem Verschleiß bei.

Weiterhin problematisch an der zunehmenden Lagergröße sind die erhöhten Toleranzen für die Lagersitzflächen. Eine Passung für einen Lagerring von 2,5m Durchmesser weist ein sehr hohes Toleranzfeld auf. Kombiniert mit dem ebenfalls hohen Toleranzfeld für den Lagersitz an der Welle oder am Gehäuse ergibt sich eine hohe Schwankung in der Presspassung. Fallen diese hohen Toleranzen ungünstig zusammen, verbleibt nur noch ein sehr geringer Anteil an Fugenpressung in dem Presssitz. Somit ist dieser Presssitz besonders anfällig auf Relativbewegung, die Passungsrost und adhäsiven Verschleiß auslöst. Dies erklärt auch die unterschiedlichen Ausfallraten bei Schäden durch Passungsrost und Verschleiß im Pressverband.

Insbesondere für Hauptlager gibt es aktuell noch keine hinreichenden technischen Lösungen für diese Problematik. Spezielle Kunststoffbeschichtungen wie PTFE auf dem Lagerring und/oder am Lagersitz an der Welle bzw. am Gehäuse können die Problematik der chemischen Reaktion zwischen den beiden metallischen Passungsträgern etwas reduzieren. Allerdings wird sich die Problematik des geringen Fugendrucks mit solchen Beschichtungen nicht beheben lassen. Harte Schichten wie DLC (Diamond Like Carbon) oder Hartchrombeschichtung für Lagerring und/oder Welle bzw. Gehäuse können den adhäsiven Verschleiß reduzieren, jedoch bleibt die Problematik der chemischen Reaktion und somit des Passungsrostes bestehen. Da beide Alternativen nur einen der zwei Verschleißmechanismen reduzieren und zudem mit sehr hohen Kosten verbunden sind, werden Sie bei Hauptlagerungen nicht eingesetzt.

Alternativ wurden in den letzten Jahren bereits Einlager-Lösungen mit verschraubten Außenringen und später auch des Innenringes der Hauptlagerung eingesetzt. Fokus war jedoch hier nicht der Pressverband sondern die Schaffung einer voreinstellbaren Lageranordnung. Die Verschraubung von Lagerringen ist jedoch wie bekannt mit zahlreichen Nachteilen verbunden. Dazu zählen hohe Ringquerschnitte (Gewicht & Kosten), limitierte Steifigkeit der Verschraubung sowie schwierige Montage solcher Wälzlagersysteme.

Ausgehend hiervon liegt der Erfindung die Aufgabe zugrunde, ein Großlager, insbesondere ein Hauptlager, für eine Windkraftanlage anzugeben, bei dem die beschriebenen Probleme hinsichtlich Passungsrost, adhäsivem Verschleiß, Ringwandern zumindest verringert und vorzugsweise unterbunden sind.

Die Aufgabe wird gemäß der Erfindung gelöst durch ein Hauptlager für eine Windkraftanlage mit zwei über zumindest ein Wälzlager aneinander gelagerten Bauteilen, nämlich ein Rotor (Welle) und ein Stator (Gehäuse). Das Wälzlager weist dabei wie üblich eine Mehrzahl an Wälzkörpern auf. Diese sind ringförmig umlaufend um eine Rotationsachse angeordnet und bilden jeweils einen Wälzkörpersatz aus. Die Wälzkörper des zumindest einen Wälzlagers sind nunmehr an beiden Bauteilen, nämlich Rotor oder Stator, unmittelbar und ohne zusätzlichen Lagerring abgestützt und wälzen im Betrieb an einer in den Rotor oder Stator unmittelbar integrierten Laufbahn ab. Die Laufbahn ist daher integrierter Bestandteil des Rotors bzw. Stators. Die bisher erforderlichen Lagerringe sind daher nunmehr vollständig in die Strukturbauteile der Welle (Rotor) bzw. des Gehäuses (Stator) integriert. Insofern bilden Lagerringe und das Gehäuse bzw. die Welle eine einstückige Baueinheit. Die Ausbildung eines Presssitzes ist daher nicht mehr erforderlich und vorgesehen. Durch diese spezielle Maßnahme ist daher die Ursache für die Probleme, wie Ringwandern, Passungsrost, effektiv vermieden.

Unter einem integrierten Bestandteil des jeweiligen Bauteils wird hierbei verstanden, dass die Laufbahnen nicht Teile eines separaten beispielsweise lediglich mit einem Presssitz verbundenen Bauteil sind. Vielmehr bilden die Laufbahnen mit dem Rotor bzw. Stator ein gemeinsames, einstückiges Bauteil. Insbesondere ist auch keine sonstige Materialverbindung wie beispielsweise eine Schweißverbindung zwischen einem Hauptkörper des Rotors bzw. Stators und einem weiteren ringförmigen und die Laufbahn tragenden Bauteil ausgebildet. Die Laufbahn ist ein Teilbereich der Oberfläche des jeweiligen gegossenen oder geschmiedeten Strukturanteils (Stator / Rotor).

Weiterhin sind der Rotor und der Stator über zwei voneinander beabstandete Wälzlager abgestützt. Bei diesen handelt es sich dabei vorzugsweise um in O-Anordnung angestellte Kegelrollenlager. Mit dieser speziellen Lagerausführung, wie sie bereits vom Grundkonzept her in der WO 2013/113487 A1 oder der WO 2013/152850 A1 beschrieben ist, wird bereits den grundlegenden negativen Einflussfaktoren, wie große Lagerdurchmesser und ungünstiger Lagersitz konstruktiv entgegen gewirkt. Mit einer derartigen Lagerausführung lassen sich nämlich bereits relativ kleine Wälzlager einsetzen und trotzdem eine sehr steife Abstützung des Rotors realisieren. Hierdurch können die üblicherweise ungünstigen Querschnittsverhältnisse bei großen Wälzlagern zumindest etwas reduziert werden. Durch die gezielte Anordnung und insbesondere unterschiedlichen Ausführungen der einzelnen Wälzkörpersätze lässt sich zudem auch eine optimale Lastverteilung in der Hauptlagerung sicherstellen, was wiederum die Lagerkinematik verbessert und die Lebensdauer erhöht.

Es ist weiterhin lediglich ein separater Lagerring an einem der beiden Wälzlager ausgebildet, der zur Erzeugung einer Lagervorspannung verstellbar ist. Die LagerVorspannung wird dabei vorzugsweise mit Hilfe eines Klemmrings aufgebracht, welcher beispielsweise mit Hilfe von Schrauben gegen den separaten Lagerring verspannbar ist und diesen insbesondere in Axialrichtung versetzt.

Insbesondere die hier beschriebene Kombination, nämlich die Anordnung von zwei voneinander beabstandeten Wälzlagern, die insbesondere als Kegelrollenlager ausgebildet und vorzugsweise in O-Anordnung angestellt sind, in Kombination mit dem nur einen separaten Lagerring zur Erzeugung der Vorspannung erlaubt in besonders effektiver Weise die Integration der weiterhin erforderlichen Laufbahnen neben dem einen separaten Lagerring in den Rotor bzw. den Stator. Im Vergleich zu den aus dem Stand der Technik bekannten Lagern entfallen daher drei von bisher vier separaten Lagerringen vollständig. Die Problematik eines Presssitzes wird vollständig eliminiert.

Gemäß einer weiteren Ausgestaltung sind der Klemmring und der Lagerring zu einer gemeinsamen Ring-Baueinheit miteinander verbunden und bilden einen Vorspannring mit einer integrierten Laufbahn. Es ist daher kein separater Klemmring bzw. kein eigenständiger Lagerring mehr erforderlich. Zweckdienlicherweise wird der Vorspannring dabei mit Hilfe einer Verschraubung, die eine Vielzahl von um den Umfang des Vorspannrings angeordnete Schrauben aufweist, mit einem der beiden Bauteile Rotor bzw. Stator verschraubt. Über ein Anzugsmoment dieser Schrauben kann die Lagervorspannung eingestellt werden.

In einer bevorzugten Ausgestaltung ist die zumindest eine Laufbahn durch eine mechanische, insbesondere spanende (Nach-)Bearbeitung des Bauteils, also des Rotors oder des Stators ausgebildet. Die Laufbahn wird daher unmittelbar in das Material des Stators / Rotors integriert.

Da im Bereich der Kontaktflächen zwischen den Wälzkörpern und der Laufbahn hohe Kräfte auftreten, ist es vorteilhaft, wenn die Laufbahn für diese hohen Kräfte entsprechend ausgelegt ist. Zweckdienlicherweise wird hierzu in einem ersten Ansatz das jeweilige Bauteil als ein Schmiedeteil ausgebildet. Es handelt sich also nicht um ein Gussbauteil, wie dies bisher bei den Bauteilen Rotor und Welle für die Hauptlager einer Windkraftanlage üblich ist.

Gemäß einem zweiten bevorzugten Ansatz, der alternativ oder ergänzend verfolgt wird, ist das jeweilige Bauteil im Bereich der Laufbahn zusätzlich gehärtet, so dass dort eine höhere Oberflächenhärte als in von der Laufbahn beabstandeten Bereichen ausgebildet ist. Hierdurch wird also durch eine gezielte Wärmebehandlung im Bereich der Laufbahnen die Oberflächenhärte erhöht. Ein derartiges selektives Härten ist bei derartigen großen Bauteilen ohne Weiteres durch selektives, bereichsweises Härten mit einer entsprechenden Temperaturbehandlung ermöglicht.

Weiterhin ist das zumindest eine Bauteil mit der integrierten Laufbahn, vorzugsweise sind beide Bauteile aus einem hochfesten Vergütungsstahl bzw. Einsatzstahl. Unter Vergütungsstählen werden üblicherweise derartige Stähle verstanden, welche durch Vergüten, also durch Härten und Anlassen, eine hohe Zug- und Dauerfestigkeit aufweisen.

Zweckdienlicherweise weist das jeweilige Bauteil dabei eine Zugfestigkeit >900 N/mm² auf.

Vorzugsweise wird als Vergütungsstahl ein Stahl des Typs 42CrMo4 oder 18CrNiNo7-6 als Einsatzstahl verwendet. Derartige Vergütungsstähle eignen sich besonders im Hinblick auf die Anforderungen für ein derartiges Großlager.

Die beiden Wälzlager sind üblicherweise axial voneinander möglichst weit beabstandet. Sie weisen insbesondere einen Lagerabstand auf, der im Bereich des 0,3- bis zum 4,5-Fachen eines Durchmessers des größten Wälzlagers liegt. Bei einer horizontalen Windkraftanlage, bei der also die Rotationsachse horizontal verläuft, liegt der Lagerabstand dabei im Bereich etwa zwischen dem 0,3- und 3,5-Fachen und bei einer vertikalen Anordnung im Bereich zwischen dem 0,5- bis 4,5-Fachen des Durchmessers des größten Wälzlagers.

In zweckdienlicher Ausgestaltung unterscheiden sich die beiden axial beabstandeten Wälzlager in ihrem Durchmesser. Grundsätzlich sind die beiden Wälzlager in bevorzugter Ausgestaltung für unterschiedliche Lasten ausgelegt und entsprechend auch unterschiedlich dimensioniert. Dies schlägt sich neben den unterschiedlichen Durchmesser der Wälzlager insbesondere auch in der Anzahl der Wälzkörper sowie in deren Größe nieder. Unter einem Durchmesser des jeweiligen Wälzlagers wird hierbei ein Teilkreisdurchmesser verstanden, welcher durch den mittleren Durchmesser des jeweiligen Wälzlagersatzes definiert ist.

Durch diese unterschiedliche Ausgestaltung der beiden Wälzlagersätze werden die beiden Wälzlager optimiert im Hinblick auf die von diesen zu übernehmenden Traglasten ausgebildet. Gleichzeitig führt dies zu einer optimalen Materialausnutzung, da das kleinere Lager nicht überdimensioniert ist. Auch dies wirkt sich besonders positiv im Hinblick auf die hier beschriebenen Maßnahmen mit der Integration der Laufbahnen im Bauteil direkt aus.

In bevorzugter Ausgestaltung sind die Wälzkörper weiterhin unter einem Druckwinkel bezüglich der Rotationsachse orientiert. Dieser liegt bei einer horizontalen Ausrichtung des Großlagers, also bei horizontalen Windkraftanlagen im Bereich von 10° bis 45° und bei vertikalen Windkraftanlagen im Bereich von 30° bis 90°. Über diese Druck- oder Anstellwinkel ist eine geeignete Krafteinleitung erzielt.

Die Aufgabe wird erfindungsgemäß weiterhin gelöst durch eine Windkraftanlage mit einem solchen Hauptlager. Die im Hinblick auf das Hauptlager angeführten Vorteile und bevorzugten Ausgestaltungen sind sinngemäß auch auf die Windkraftanlage zu übertragen.

Die hier beschriebene Lösung hat insgesamt mehrere Vorteile gegenüber dem Stand der Technik. Eine aufwendige Montage der Lagerringe mit Erwärmung der Lagerringe und des Gehäuses / der Welle zur Ausbildung der Presspassung entfällt. Zug- oder Druckspannungen bzw. Formabweichung der Laufbahn aufgrund der Ringmontage entfallen vollständig. Die Bearbeitung, Vermessung, Transport und Lagerung der einzelnen Ringe fällt ebenfalls weg. Die Integration der Lagerringe in ein Gehäuse ermöglicht höchste Laufgenauigkeit der Laufbahnen zueinander. Bei der mechanischen Bearbeitung zur Ausbildung der Lageringe ermöglicht das steifere Gehäuse bzw. Welle ein höhere Spanabnahme sowie Rundheits-, und Welligkeitstoleranzen.

Ausführungsbeispiele der Erfindung werden nachfolgend anhand der Figuren 1 bis 5 näher erläutert. Dabei zeigen jeweils in Darstellungen nach Art von Schnittansichten:
- Fig. 1: eine ausschnittsweise Ansicht einer Hauptlagereinheit mit innen liegendem Rotor und äußerem feststehenden Stator, die insbesondere für indirekt angetrieben Windkraftanlagen ausgebildet ist,
- Fig. 2: eine ausschnittsweise Ansicht einer Hauptlagereinheit mit innenliegendem Rotor und äußerem feststehenden Stator, die insbesondere für direkt angetriebene Windkraftanlagen ausgebildet ist,
- Fig. 3: eine ausschnittsweise Ansicht einer Hauptlagereinheit mit innen liegendem feststehenden Stator (Zapfen) und einem außen liegenden Rotor,
- Fig. 4: eine Ansicht einer Hauptlagereinheit für eine Vertikalachs-Windkraftanlage mit innenliegendem feststehenden Stator (Zapfen) und einem außen liegenden Rotor,
- Fig. 5: eine Ansicht einer Hauptlagereinheit für eine Vertikalachs-Windkraftanlage mit innenliegendem Rotor und äußerem feststehenden Stator sowie
- Fig. 6: eine ausschnittsweise Ansicht einer Hauptlagereinheit, bei der eine Laufbahn in einen Vorspannring integriert ist.

In den Figuren sind jeweils gleich wirkende Bauteile mit den gleichen Bezugszeichen versehen. Die in den Figuren dargestellten unterschiedlichen Ausführungsbeispiele können untereinander auch in beliebiger Weise miteinander kombiniert werden.

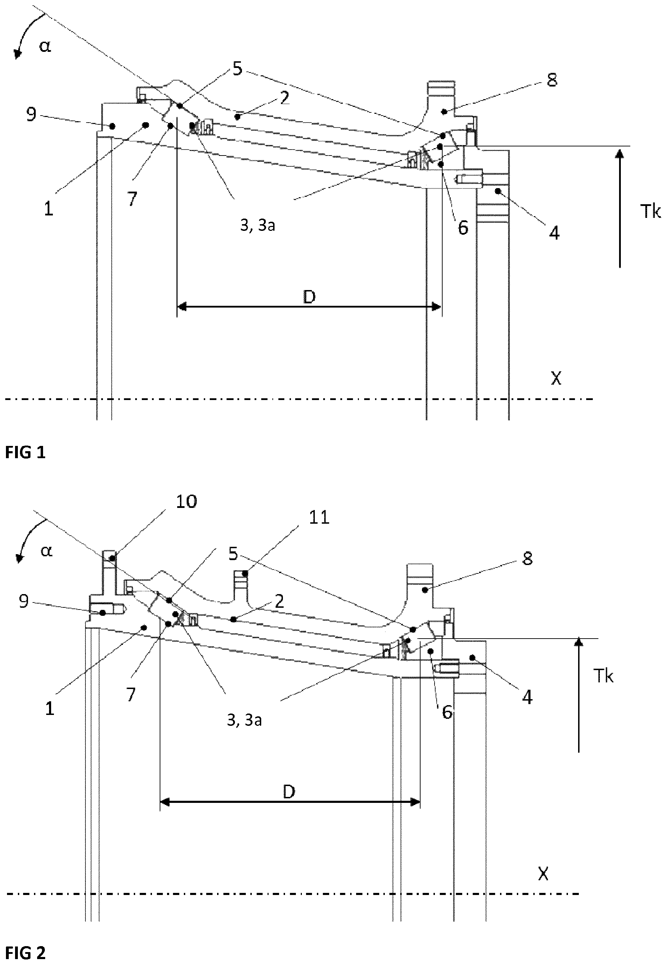

Fig. 1 bis 3 zeigen ausschnittsweise Schnittdarstellungen eines als Hauptlagereinheit ausgebildeten Großlagers einer Windkraftanlage. Die Figuren zeigen dabei jeweils nur eine (obere) Hälfte der Hauptlagereinheit. Die Hauptlagereinheit dient zur Lagerung einer Rotornabe und ist an einem auch als Maschinenträger bezeichneten Turm der Windkraftanlage angeordnet. Der grundsätzliche Aufbau und Anordnung der hier ausschnittsweise dargestellten Hauptlagereinheit in Bezug zur Rotornabe und Maschinenträger geht aus der WO 2013/113487 A1, dort beispielsweise aus den Fig. 1 bis 6 sowie aus der WO 2013/152850 A1, dort aus den Fig. 1 und 2 hervor. Auf deren Offenbarungsgehalt wird insofern vollumfänglich verwiesen und hiermit in die vorliegende Offenbarung mit einbezogen.

Fig. 1 zeigt als ein erstes Ausführungsbeispiel eine Ansicht einer Hauptlagerung einer Windkraftanlage, die sich entlang einer Rotationsachse X erstreckt. Dabei umfasst die Hauptlagerung einen im Betrieb drehenden Rotor 1 (Welle) und einen feststehenden Stator (Gehäuse) 2 die über zwei Wälzlager 3 aneinander gelagert sind. Diese umfassen jeweils einen Wälzkörpersatz 3a mit mehreren ringförmig umlaufend angeordneten Wälzkörpern, die insbesondere kegelstumpfförmig ausgebildet sind. Diese sind jeweils vorzugsweise in O-Anordnungen angestellt.

Lediglich bei einem der beiden Wälzlager 3 ist ein separater als Innenring 6 ausgebildeter Lagerring eingesetzt, welcher mit Hilfe eines Klemmrings 4 in axialer Richtung verspannbar ist. Dadurch wird das gesamte Lager vorgespannt. An allen weiteren Kontaktstellen der Wälzkörper stützen diese sich unmittelbar am Rotor 1 bzw. am Stator 2 über eine innere Laufbahn 7 bzw. eine äußere Laufbahn 5 ab. Die beiden Laufbahnen 5,7 sind dabei unmittelbar in die Oberfläche des Rotors 1 bzw. des Stators 2 integriert.

Die beiden Wälzkörpersätze 3a sind vorzugsweise als Kegelrollenlager mit einem Druckwinkel α von 10-45° ausgeführt. Darüber hinaus sind die Wälzkörpersätze 3a unterschiedlich in Größe, Anzahl, Teilkreisdurchmesser etc. ausgeprägt um eine optimale Lastaufnahme, Ausnutzung und Kinematik zu gewährleisten. Der Wälzkörpersatz 3a kann zusätzlich durch einen ein- oder mehrteiligen Käfig unterstützt werden. Dieser Käfig kann sich an dem Wälzkörpersatz 3a, Rotor 1, Stator 2, oder Lagerring 6 abstützen (führen). Es hat sich als besonders vorteilhaft gezeigt, die Wälzkörpersätze 3a (Mitte Wälzkörper) axial in einem Lagerabstand D von mindesten 0,3 bis 3,5 eines Wälzkörperteilkreises Tk (größter Tk der zwei Wälzkörpersätze 3a) anzuordnen. Somit wird eine optimale Lastverteilung der zwei Wälzkörpersätze 3a gewährleistet. Die beiden Wälzkörpersätze 3a werden vorzugweise spielfrei gegeneinander angestellt. Hierzu wird der Klemmring 4 und der Innenring 6 axial angestellt bis sich ein negatives Betriebsspiel (Vorspannung) zwischen dem jeweiligen Wälzkörpersatz 3a und den äußeren integrierten Laufbahnen 5, der inneren integrierten Laufbahn 7 und dem Innenring 6 einstellt. Durch die so eingebrachte Vorspannung sind die Wälzkörpersätze 3a im Betrieb immer ausreichend geführt und neigen somit weniger zum Schränken, Kippen und Gleiten.

Die Ausbildung der äußeren Laufbahnen 5 erfolgt durch vollständige Integration in den Stator 2. Dabei wird der Stator 2 so ausgeformt, dass die Wälzkörper kinematisch kontrolliert abrollen können. Gleiches gilt für die Ausprägung der inneren Laufbahn 7 zur Rotorwelle 1. Diese wird erfindungsgemäß in die Welle integriert. Beide Bauteile 1,2 weisen daher im Bereich der Laufbahnen 5,7 Teilbereiche auf, welche unter dem Druckwinkel α orientiert sind.

Durch diese erfindungsgemäße Ausführung entfallen die erforderlichen zusätzlichen Lagerringe. Da der Innenring 6 axial verschieblich ist, entfällt somit jeglicher Pressverband zwischen Lagerung und Rotor 2. Der Wegfall des Presssitzes hat zahlreiche Vorteile gegenüber dem Stand der Technik.

Der Rotor 1 und der Stator 2 werden insbesondere als Schmiedeteile ausgeführt. Die Kontaktbereiche der Wälzkörper zum Rotor1, Stator 2 sowie zum Innenring 6, also insbesondere die Laufbahnen 5,7 werden vorzugsweise einsatz- oder randschichtgehärtet. Als Material für Stator 2 und Rotor 1 werden basierend auf dem Härteverfahren insbesondere hochfeste, hochreine, überrollfeste Vergütungsstähle und Einsatzstähle, insbesondere 42CrMo4 oder 18CrNiMo7-6 eingesetzt.

Bei der Ausprägung nach Figur 1 wird der Rotor 1 mit einer Rotornabe an einem Nabenflansch 9 befestigt. Ein Getriebe wird an dem Klemmring 4 oder einen zusätzlichen Getriebeflansch an dem Rotor 1 (hier nicht dargestellt) befestigt. Die Verbindung über den Klemmring 4 oder den Getriebeflansch überträgt somit im Wesentlichen das Drehmoment vom Rotor 1, das zur Energieerzeugung genutzt wird. Der Großteil der Biegemomente und Kräfte wird über die Wälzkörpersätze 3a und Laufbahnkontakte vom Rotor 1 in den Stator 2 geleitet. Der Stator 2 ist wiederum mit einem Flansch 8 mit dem Maschinenträger verbunden. Die Biegemomente und Kräfte werden somit vom Stator 2 über den Maschinenträger in den Turm geleitet. Diese Ausprägung wird überwiegend bei Windkraftanlagen mit Getriebe eingesetzt.

Fig. 2 zeigt eine alternative Ausführung, die überwiegend für direkt getriebene Windkraftanlagen Anwendung findet. Diese Ausprägung wird durch einen zusätzlichen Flansch 10 an dem Rotor 1 und Flansch 11 an dem Stator 2 ausgebildet. Wie bereits bei der vorherigen Ausprägung nach Fig. 1 wird der Rotor 1 mit der Nabe über den Flansch 9 verbunden und der Stator 2 über den Flansch 8 mit dem feststehenden Maschinenträger. Der Anschluss an das Getriebe über den Klemmring 4 entfällt bei dieser Ausführung vollständig. Der Rotor des Generators wird mit dem Flansch 10 des Rotors 1 verbunden und ein Stator des Generator über den Flansch 11 des Stators 2 mit dem Maschinenträger.

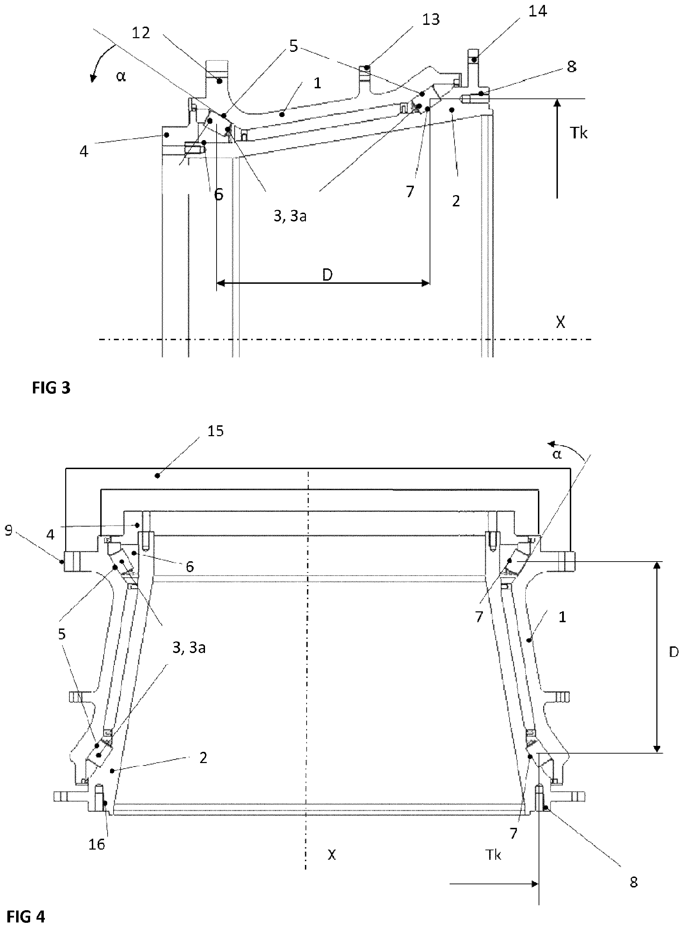

Fig. 3 zeigt ein weiteres Ausführungsbeispiel. Anders als bei Fig. 1 und 2 ist sind die Positionen des Rotors 1 und des Stators 2 vertauscht, d.h. der Rotor 1 ist außenliegend und der Stator 2 ist innenliegend angeordnet. Der grundsätzliche Aufbau mit den vorgespannten Kegelrollenlagern in O-Anstellung bleibt beibehalten. Der Stator 2 ist hier feststehend und somit über den Anschlussflansch 8 mit dem Maschinenträger verbunden. Die Wälzkörpersätze 3a verbinden wiederum den feststehenden Stator 2 mit dem Rotor 1. Der Rotor 1 ist mit der Rotornabe über den Anschlussflansch 12 verbunden. Die Wälzkörpersätze 3a werden wiederum vorzugsweise spielfrei eingestellt und über den Klemmring 4 und den Lagerring 6 zueinander fixiert. Die Wälzkörperabmessungen werden wiederum gezielt in Größe, Anzahl, Teilkreisdurchmesser variiert um eine optimale Auslastung und Lastverteilung zu gewährleisten. Über die äußeren Laufbahnen 5 und den inneren Laufbahnen 7 und den Lagerring 6 erfolgt die Übertragung der Kräfte und Momente. Dabei werden die Kräfte und Momente von der Rotornabe die mit den Flansch 12 mit dem Rotor 1 verbunden ist, über die Kontakte 5;6;7 bzw. Wälzkörpersätze 3a in den feststehenden Stator 2 übertragen. Vom Stator 2 werden Sie über den Anschlussflansch 8 in den Maschinenträger geleitet. Bei dem Einsatz eines direkt getriebenen Generators wird an den Anschlussflansch 13 der Rotor des Generators und an den Anschlussflansch 14 der Stator des Generators angeschlossen.

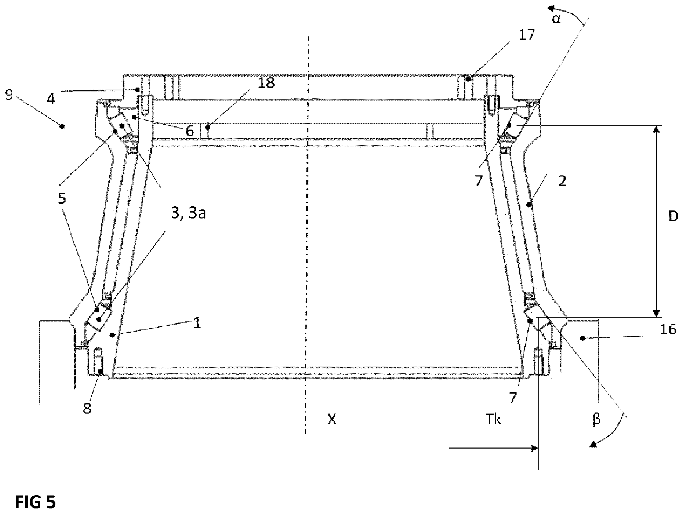

Fig. 4 und 5 zeigen als weitere Ausführungsvarianten jeweils eine Hauptlagerung für eine Vertikalachs-Windkraftanlage. Gegenüber konventionellen Windkraftanlagen mit horizontaler Rotationsachse X steht die Rotationsachse X hier senkrecht zum Boden. Vorteile solcher Windturbinen sind im Wesentlichen geringere Turmhöhen, niedriger Schwerpunkt, Generator und Getriebe können am Boden angeordnet werden und ein Azimutsystem für die Windnachführung ist nicht erforderlich. Diese Vorteile bieten insbesondere bei der Nutzung von schwimmenden Plattformen erhebliche Vorteile. Durch den niedrigen Schwerpunkt und Angriff der Windlasten ist eine deutlich stabilere Lage sichergestellt, was wiederum die Möglichkeit gibt, die schwimmende Plattform kleiner zu dimensionieren. Der grundsätzliche Aufbau mit den beiden insbesondere als Kegelrollenlager ausgebildeten Wälzlagern 3, die insbesondere in O-Anordnung angestellt, um den Lagerabstand D beabstandet und vorgespannt sind, bleibt erhalten. Die dargestellte Hauptlagereinheit wird vorzugsweise wiederum als vorgefertigte, vorgespannte Lagereinheit auf die Baustelle gebracht. Die Ausbildung einer Hauptlagerung für diesen Anlagentyp gestaltet sich wie folgt:
Bei der Ausführung gemäß Fig. 4 ist der feststehende Stator 2 wiederrum innenliegend und der Rotor 1 außenliegend angeordnet. Der Stator 2 wird direkt mit dem Turm über den Anschlussflansch 8 verbunden. Über die Wälzkörpersätze 3a und die Kontakte 5;6;7 werden die Kräfte und Momente aus dem drehenden Rotor 1 auf den feststehenden Stator 2 übertragen. Die Wälzkörpersätze 3a sind wiederum vorzugsweise in O-Anordnung spielfrei angestellt und werden durch den Klemmring 4 und den Innenring 6 axial fixiert. Am Rotor 1 wird an mindesten einem Anschlussflansch 9 der Rotor angeschlossen. Ein Rotationsdeckel 15 wird mit dem Rotor 1 verbunden und ist wiederum mit weiteren Elementen mit Getriebe oder Generator verbunden. Der Lagerbestand D der Wälzkörpersätze sollte hier vorzugsweise mindesten das 0,5 bis 4,5-Fache des Teilkreis Tk des Größeren der zwei Wälzkörpersätze 3a aufweisen.

Fig. 5 zeigt eine weitere Ausführung der Hauptlagerung für eine Vertikalachs-Windkraftanlage. Dabei ist der Rotor 1 innenliegend angeordnet. Er stützt sich wiederum über die Wälzköpersätze 3a und Laufbahnen 5,7 sowie den Innenring 6 an dem feststehenden Stator 2 ab. Der Stator 2 ist mit dem Turm bzw. einer Turmkopfkonstruktion 16 verbunden. Die Wälzkörpersätze 3a sind wiederum vorzugsweise in vorgespannter O-Anordnung mit dem Abstand D von 0,5-4,5 x Tk angeordnet und werden durch den Innenring 6 und Klemmring 4 axial zusammengehalten. An den Klemmring 4 wird über einen Anschlussflansch 17 der Rotor befestigt. Alternativ kann auch ein Anschlussflansch 18 direkt am Rotor 1 für die Befestigung des Rotors 1 vorgesehen werden. Das Getriebe und/oder der Generator werden mit dem Rotor 1 über den Flansch 8 verbunden.

Für die Ausführung gemäß Fig. 4 und 5 gilt, dass der untere der zwei Wälzkörpersätze 3a dauerhaft mit den hohen Axialkräften, die aus dem Rotorgewicht resultieren, beaufschlagt wird. Aus diesem Grund ist hier ein Druckwinkel β für diesen (unteren) Wälzkörpersatz 3a von 30° bis 90° als besonders vorteilhaft anzusehen. Weiterhin ist auch bei dieser Ausführung eine unterschiedliche Ausprägung der Wälzkörpersätze in Größe, Anzahl und Teilkreis vorteilhaft.

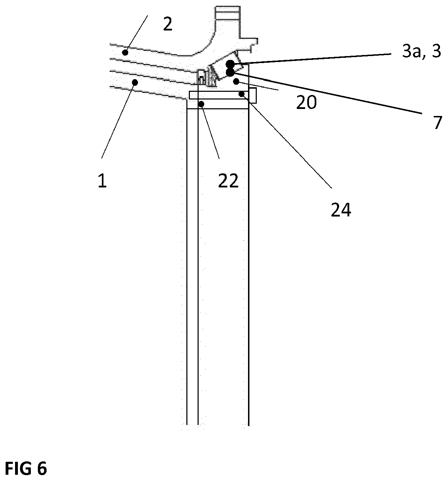

Eine weitere erfindungsgemäße Ausführung wird zu Figur 6 beschrieben. Hier sind der bisher separate Innenring 6 sowie der separate Klemmring 4 gemäß den Figuren 1-5 zu einem Vorspannring 20 vereint. Dieser Vorspannring 20 wird mit dem Rotor 1 über einen Verbindungsflansch 22 mittels einer Verschraubung 24 fest verbunden. Die Vorspannung wird somit über den Vorspannring 20 in das System eingebracht. Mit dieser Ausführung lässt sich somit auch der letzte verbleibende Lagerring vermeiden. In den Vorspannring ist daher eine Laufbahn 7 für den Wälzlagersatz 3a integriert. Zusätzlich kann durch den Wegfall des Klemmrings 4 die Teilevielfalt reduziert werden. Die gesamte Hauptlagerung kommt daher ohne speziellen Lagerring aus. Sämtliche Laufbahnen 5,7 sind integrale Bestandteile weiterer Bauteile. Die einzelnen dargestellten Ausführungsformen zeigen die Lageranordnung, zumindest die für die Lagerung erforderlichen Teile abschießend. Es sind daher vorzugsweise neben den beiden Wälzlagern 3 keine weiteren Lager ausgebildet. In allen Fällen ist das innenliegende Bauteil, also je nach Ausführungsform der Rotor 1 oder der Stator 2, als (begehbares) Hohlbauteil ausgebildet.

Alternativ hierzu ist ein zusätzlicher Wälzkörpersatz in Form von Zylinderrollen angeordnet (nicht dargestellt). Hierfür werden die beiden Wälzkörpersätze 3a mit den Kegelrollen in O-Anordnung mit einen Abstand kleiner einem Viertel des Teilkreisdurchmessers TK der Wälzkörpersätze 3a, also quasi als benachbartes Paar zueinander angeordnet. Der zusätzliche zylindrische Wälzkörpersatz wird parallel zur Rotationsachse X mit einem Lagerabstand zu den beiden Wälzkörpersätzen 3a bezogen auf die axiale Mitte der beiden Wälzkörpersätze 3 angeordnet. Dieser Lagerabstand entspricht mindestens dem Teilkreis Tk der konischen Wälzkörpersätze 3a. Diese Ausgestaltung mit den zusätzlichen Zylinderrollen kann auf alle in den Fig. 1 bis 5 dargestellte Varianten eingesetzt werden.

### Bezugszeichenliste

- 1: Rotor
- 2: Stator
- 3: Wälzlager
- 3a: Wälzkörpersatz
- 4: Klemmring
- 5: Laufbahn
- 6: Innenring
- 7: Laufbahn
- 8: Anschlussflansch Maschinenträger
- 9,12: Anschlussflansch Nabe
- 10,13: Anschlussflansch Generator Rotor
- 11,14: Anschlussflansch Generator Stator
- 15: Rotationsdeckel
- 16: Turm
- 17: Anschlussflansch Rotor
- 18: weiterer Anschlussflansch Rotor
- 20: Vorspannring
- 22: Verbindungsflansch
- 24: Verschraubung

- Tk: mittlerer Teilkreisdurchmesser eines Wälzkörpersatzes
- X: Rotationsachse
- α: Druckwinkel
- β: Druckwinkel

## Patentansprüche

1. Hauptlager für eine Windkraftanlage, mit zwei über zumindest ein Wälzlager (3) aneinander gelagerten Bauteilen (1,2), nämlich ein Rotor (1) und ein Stator (2), wobei das zumindest eine Wälzlager (3) einen Wälzkörpersatz (3a) mit mehreren Wälzkörpern aufweist,
**dadurch gekennzeichnet,**
**dass** der zumindest eine Wälzkörpersatz (3a) sich an beiden Bauteilen (1,2) unmittelbar ohne separaten Lagerring an einer Laufbahn (5,6) abstützt, die integrierter Bestandteil des jeweiligen Bauteils (1,2) ist, und dass der Rotor (1) und der Stator (2) über zwei voneinander beabstandete Wälzlager (3) abgestützt sind, wobei lediglich ein separater Lagerring (6) oder ein Vorspannring (20) mit integrierter Laufbahn an einem der beiden Wälzlager (3) ausgebildet ist, der zur Erzeugung einer Lagervorspannung verstellbar ist.

2. Hauptlager nach Anspruch 1,
**dadurch gekennzeichnet,**
**dass** es sich bei den beiden Wälzkörpersätzen (3a) um insbesondere in O-Anordnung angestellte Kegelrollenlagersätze handelt.

3. Hauptlager nach dem Anspruch 1 oder 2,
**dadurch gekennzeichnet,**
**dass** der Vorspannring (20) über eine Verschraubung (22) mit einem der Bauteile (1,2) verbunden ist und über die Verschraubung die Lagervorspannung einstellbar ist.

4. Hauptlager nach einem der vorhergehenden Ansprüche,
**dadurch gekennzeichnet,**
**dass** die zumindest eine Laufbahn (5,7) durch mechanische, insbesondere spanende Bearbeitung des Bauteils (1,2) ausgebildet ist.

5. Hauptlager nach einem der vorhergehenden Ansprüche,
**dadurch gekennzeichnet,**
**dass** zumindest eines der Bauteile (1,2), vorzugsweise beide Bauteile (1,2) als Schmiedeteile ausgebildet sind.

6. Hauptlager nach einem der vorhergehenden Ansprüche,
**dadurch gekennzeichnet,**
**dass** das jeweilige Bauteil (1,2) im Bereich der Laufbahn (5,7) gehärtet ist, so dass es dort eine höhere Oberflächenhärte als in von der Laufbahn (5,7) beabstandeten Bereichen aufweist.

7. Hauptlager nach einem der vorhergehenden Ansprüche,
**dadurch gekennzeichnet,**
**dass** das zumindest eine Bauteil (1,2) und vorzugsweise beide Bauteile (1,2) aus einem hochfesten Vergütungsstahl, insbesondere aus einem Vergütungsstahl des Typs 42CrMo4 oder 18CrNiMo7-6 bestehen.

8. Hauptlager nach Anspruch 7,
**dadurch gekennzeichnet,**
**dass** das zumindest eine Bauteil (1,2) eine Zugfestigkeit größer 900N/mm² aufweist.

9. Hauptlager nach einem der vorhergehenden Ansprüche,
**dadurch gekennzeichnet,**
**dass** die beiden Wälzlager (3) axial um einen Lagerabstand (D) voneinander beabstandet sind, der im Bereich des 0,3 bis zum 4,5-Fachen eines Durchmessers (Tk) des größten Wälzlagers liegt.

10. Hauptlager nach einem der vorhergehenden Ansprüche,
**dadurch gekennzeichnet,**
**dass** die beiden Wälzlager (3) für unterschiedliche Lasten ausgelegt und unterschiedlich dimensioniert sind.

11. Hauptlager nach einem der vorhergehenden Ansprüche,
**dadurch gekennzeichnet,**
**dass** die beiden Wälzlager (3) wahlweise oder in Kombination unterschiedliche Durchmesser, eine unterschiedlichen Anzahl von Wälzkörpern und/oder unterschiedlichen Wälzkörpergrößen aufweisen.

12. Hauptlager nach einem der vorhergehenden Ansprüche,
**dadurch gekennzeichnet,**
**dass** die Wälzkörper des Wälzkörpersatzes (3a) unter einem Druckwinkel (α,β) bezüglich der Rotationsachse orientiert sind, der für eine horizontale Ausrichtung des Großlagers im Bereich von 10° bis 45° und der für eine vertikale Ausrichtung des Großlagers im Bereich von 30° bis 90° liegt.

13. Windkraftanlage mit einem Hauptlager nach einem der vorhergehenden Ansprüche.

## Claims

1. Main bearing for a wind turbine, having two components (1, 2), namely a rotor (1) and a stator (2), which are mounted against one another by means of at least one rolling bearing (3), wherein the at least one rolling bearing (3) has a rolling element set (3a) with multiple rolling elements,
**characterized**
**in that** the at least one rolling element set (3a) bears, on both components (1, 2), directly and without a separate bearing ring against a race (5, 6) that is an integral part of the respective component (1, 2), and
**in that** the rotor (1) and the stator (2) are supported by two mutually spaced-apart rolling bearings (3), wherein only one separate bearing ring (6) or prestressing ring (20) with an integrated race is formed on one of the two rolling bearings (3), which is adjustable in order to generate a bearing prestress.

2. Main bearing according to Claim 1,
**characterized**
**in that** the two rolling element sets (3a) are conical roller bearing sets laid out in particular in an O arrangement.

3. Main bearing according to Claim 1 or 2,
**characterized**
**in that** the prestressing ring (20) is connected to one of the components (1, 2) by means of a screw arrangement, and the screw arrangement allows the bearing prestress to be adjusted.

4. Main bearing according to one of the preceding claims,
**characterized**
**in that** the at least one race (5, 7) is created by mechanical, in particular chip-removing machining of the component (1, 2).

5. Main bearing according to one of the preceding claims,
**characterized**
**in that** at least one of the components (1, 2), and preferably both components (1, 2), is/are created as forged parts.

6. Main bearing according to one of the preceding claims,
**characterized**
**in that** the respective component (1, 2) is quenched in the region of the race (5, 7) so as to have a higher surface hardness there than in regions remote from the race (5, 7).

7. Main bearing according to one of the preceding claims,
**characterized**
**in that** the at least one component (1, 2), and preferably both components (1, 2), is/are made of a high-strength tempering steel, in particular of a tempering steel of the type 42CrMo4 or 18CrNiMo7-6.

8. Main bearing according to Claim 7,
**characterized**
**in that** the at least one component (1, 2) has a tensile strength of greater than 900 N/mm².

9. Main bearing according to one of the preceding claims,
**characterized**
**in that** the two rolling bearings (3) are spaced apart axially from one another by a bearing spacing (D) which is in the range from 0.3 to 4.5 times a diameter (Tk) of the largest rolling bearing.

10. Main bearing according to one of the preceding claims,
**characterized**
**in that** the two rolling bearings (3) are configured for different loads and have different dimensions.

11. Main bearing according to one of the preceding claims,
**characterized**
**in that** the two rolling bearings (3) have, optionally or in combination, different diameters, a different number of rolling elements and/or different rolling element sizes.

12. Main bearing according to one of the preceding claims,
**characterized**
**in that** the rolling elements of the rolling element set (3a) are oriented at a pressure angle (α, β) relative to the axis of rotation, which angle is in the range from 10° to 45° for a horizontal orientation of the large bearing, and is in the range from 30° to 90° for a vertical orientation of the large bearing.

13. Wind turbine having a main bearing according to one of the preceding claims.

## Revendications

1. Palier principal pour une éolienne, avec deux composants (1, 2) montés l'un sur l'autre au moyen d'au moins un palier à roulement (3), à savoir un rotor (1) et un stator (2), dans lequel ledit au moins un palier à roulement (3) présente un jeu de corps de roulement (3a) avec plusieurs corps de roulement, **caractérisé en ce que** ledit au moins un jeu de corps de roulement (3a) s'appuie sur les deux composants (1, 2) directement sans bague de palier séparée sur une voie de roulement (5, 6), qui fait intégralement partie du composant respectif (1, 2), et **en ce que** le rotor (1) et le stator (2) sont appuyés au moyen de deux paliers à roulement espacés l'un de l'autre (3), dans lequel seule une bague de palier séparée (6) ou une bague de précontrainte (20) avec une voie de roulement intégrée est formée sur un des deux paliers à roulement (3), et est déplaçable pour produire une précontrainte de palier.

2. Palier principal selon la revendication 1, **caractérisé en ce que** les deux jeux de corps de roulement (3a) sont des jeux de paliers à roulement coniques agencés en particulier en une disposition en O.

3. Palier principal selon la revendication 1 ou 2, **caractérisé en ce que** la bague de précontrainte (20) est assemblée à un des composants (1, 2) par un assemblage vissé (22) et la précontrainte du palier est réglable au moyen de l'assemblage vissé.

4. Palier principal selon l'une quelconque des revendications précédentes, **caractérisé en ce que** ladite au moins une voie de roulement (5, 7) est formée par traitement mécanique, en particulier par enlèvement de copeaux, du composant (1, 2).

5. Palier principal selon l'une quelconque des revendications précédentes, **caractérisé en ce qu'**au moins un des composants (1, 2), de préférence les deux composants (1, 2), est/sont une/des pièce(s) forgée(s).

6. Palier principal selon l'une quelconque des revendications précédentes, **caractérisé en ce que** le composant respectif (1, 2) est durci dans la région de la voie de roulement (5, 7), de telle manière qu'il y présente une dureté de surface plus élevée que dans des régions distantes de la voie de roulement (5, 7).

7. Palier principal selon l'une quelconque des revendications précédentes, **caractérisé en ce qu'**au moins un composant (1, 2) et de préférence les deux composants (1, 2) est/sont constitué(s) d'un acier de traitement à haute résistance, en particulier d'un acier de traitement du type 42CrMo4 ou 18CrNiMo7-6.

8. Palier principal selon la revendication 7, **caractérisé en ce que** ledit au moins un composant (1, 2) présente une résistance à la traction supérieure à 900 N/mm².

9. Palier principal selon l'une quelconque des revendications précédentes, **caractérisé en ce que** les deux paliers à roulement (3) sont espacés axialement l'un de l'autre d'une distance de paliers (D), qui se situe dans la plage de 0,3 à 4,5 fois un diamètre (Tk) du plus grand palier à roulement.

10. Palier principal selon l'une quelconque des revendications précédentes, **caractérisé en ce que** les deux paliers à roulement (3) sont conçus pour des charges différentes et sont dimensionnés différemment.

11. Palier principal selon l'une quelconque des revendications précédentes, **caractérisé en ce que** les deux paliers à roulement (3) présentent au choix ou en combinaison des diamètres différents, un nombre différent de corps de roulement et/ou des tailles de corps de roulement différentes.

12. Palier principal selon l'une quelconque des revendications précédentes, **caractérisé en ce que** les corps de roulement du jeu de corps de roulement (3a) sont orientés par rapport à l'axe de rotation sous un angle de pression (α, β), qui se situe pour une orientation horizontale du grand palier dans la plage de 10° à 45° et pour une orientation verticale du grand palier dans la plage de 30° à 90°.

13. Eolienne dotée d'un palier principal selon l'une quelconque des revendications précédentes.
